# EUROPEAN PATENT SPECIFICATION

(11) **EP 4 183 639 B1**
(45) Date of publication and mention of the grant of the patent: **26.02.2025**
(21) Application number: 22207984.0
(22) Date of filing: 17.11.2022
(51) Int. Cl.: B60T 7/10, B60T 13/74, B61H 13/02, F16D 127/02

(54) **APPARATUS FOR RELEASING A PARKING BRAKE OF A VEHICLE, NOTABLY A RAILWAY VEHICLE, AND RELATED VEHICLE**
VORRICHTUNG ZUR FREIGABE EINER FESTSTELLBREMSE EINES FAHRZEUGS, INSBESONDERE EINES SCHIENENFAHRZEUGS, UND ZUGEHÖRIGES FAHRZEUG
DISPOSITIF DE DESSERRAGE D'UN FREIN DE STATIONNEMENT D'UN VÉHICULE, NOTAMMENT UN VÉHICULE FERROVIAIRE, ET VÉHICULE ASSOCIÉ

(30) Priority: 19.11.2021 IN 202141053310
(43) Date of publication of application: 24.05.2023
(73) Proprietor: ALSTOM Holdings, 93400 Saint-Ouen-sur-Seine (FR)
(72) Inventor: NARAYANA KURUP, Sajan Kumar, 560096 Bangalore (IN)
(74) Representative: Lavoix

(56) References cited:
- EP-B1- 1 462 330
- WO-A2-02/36408
- DE-B4- 102007 033 007
- US-A1- 2003 070 884
- US-A1- 2006 016 647
- US-B2- 6 913 325

## Description

The present invention concerns an apparatus for releasing a parking brake of a vehicle, notably a railway vehicle, and a vehicle comprising such an apparatus.

The present invention is particularly suitable for being used with railways vehicles, such as train or metro convoys, and will be described hereinafter by making reference to such application without intending in any way to limit its possible use with other suitable types of vehicles; further, the term vehicle has to be understood hereinafter as encompassing a vehicle formed by one or more parts or units, such as a train including one or more cars.

The use of parking brakes for temporarily holding for example railway vehicles immobilized in a parked position, is well known.

Such parking brakes are associated with suitable mechanisms adapted to release the parking brake and allow the vehicle to move from the stationary position.

At present, although known release mechanisms perform properly their functional tasks, they still present some aspects susceptible of further improvements.

For instance, one solution currently adopted foresees the use of a cable which is manually operated in order to pull a valve and release the parking brake.

To this end, the cable is operated by a handle which is pulled by an operator; in particular, the operator has first to get off from the vehicle and then to act manually directly on the handle.

Alternatively, the operator can use a special tool to pull the handle standing from the door side on board of the vehicle.

In both cases, this kind of release solution is substantially inconvenient, it demands substantial physical efforts to operators, and is highly time consuming in particular when the vehicle is a large one, e.g. in case of a train with many cars.

EP 1462330 B1 discloses an electrically powered actuator mechanism for operating a vehicle parking brake including a reversible electrical motor having output gearing driving a sector gear. A wrapped spring clutch drivingly connects the sector gear to an intermediate operator cable wind up wheel. The intermediate cable is connected to the brake cable to set the brakes when the operator cable is wound up by energization of the motor in one direction, with a load sensor turning off the motor when a predetermined tension load is reached. Locking motor gearing holds the brake in the set condition. Reversal of the motor upwinds the cable to release the parking brake. A self adjusting feature is provided by a pretensioned clock spring creating a torsional bias on the wind up wheel tending to maintain a predetermined tension in the brake cable. A spring clutch is released by engagement of a release arm to allow the clock spring to adjust the wind up wheel. A cable operated manual release causes a release lever to engage the clutch spring release arm to allow the cable to release although the clock spring monitoring a minimum tension after release of the winding wheel.

US 6,913,325 B2 discloses an electrically or manually operable brake drive for the brakes of a vehicle which has a gear train driven by a reversible electric motor or a manual member. The brakes can be set or released by the electric motor without manual changing of the drive components permitting setting and releasing of the brakes at a location remote from the drive. For maintaining the brakes in a "set" mode, the drive includes a gradual release detent mechanism which permits rotation of the gears in the brake setting direction but opposes such rotation in the opposite direction unless a drive shaft rotatable by the motor or the manual member is rotated in the brake release direction.

US 2006/016647 A1 discloses a manual brake release and status indicator device for a parking brake for a rail vehicle. The manual brake release includes a positioner rod having a handle at one end and a second end connected to a positioner assembly which is associated with a parking brake clamp mechanism. The positioner assembly is movable via the handle to manually release the parking brake clamp from an applied position. The handle is associated with the status indicator that includes a face plate positioned in proximity to the handle. The position of the handle relative to the face plate indicates whether the parking brake is applied or released.

WO 02/36408 A2 discloses an electronically controlled parking or safety brake for a locomotive. A brake employs both manual and automatic modes. An electronic control system facilitates the setting and releasing of the brake in the automatic mode. An actuating mechanism is capable of operating in a first mode to set the brake and in a second mode to release the brake. A motor, clutch, gearing means, ratchet mechansim, solenoid, and electronic control system are operatively connected to a chain to set the brake on the locomotive wheel. Remote operation of the brake is possible through hard wired control signals or by wireless communication using a transmitter to send signals to the electronic control means.

US 2003/070884 A1 discloses an electric brake actuator for actuating a brake arrangement. The actuator includes an electric drive unit and a load multiplier. The electric drive unit is in cable connection through a first cable means with the load multiplier, and the load multiplier is arranged for cable connection through a second cable means with the brake arrangement. The electric drive unit is operable to apply a load to the load multiplier through the first cable means and the load multiplier is operable to multiply the load for application to the brake arrangement through the second cable means.

DE 10 2007 033007 B4 discloses a parking brake unit which comprises two electromotive drives, a first wheel brake and a second wheel brake. A cable winch is connected with the first wheel brake, and another cable winch is connected to the second wheel brake. A shaft extractor is connected with the two cable winches, and is also connected over a gear with two electromotive drives.

The main aim of the present invention is to provide a release apparatus capable of mitigating such issues and offering some improvements over known solutions, while allowing to adequately and efficiently release an associated parking brake.

This aim is achieved by an apparatus for releasing a parking brake of a vehicle according to the apppended set of claims.

This aim is also achieved by a vehicle, notably a railway vehicle, according to claim 6.

Further characteristics and advantages will become apparent from the description of some preferred but not exclusive exemplary embodiments of a release apparatus according to the present disclosure, illustrated only by way of non-limitative examples with the accompanying drawings, wherein:
Figure 1 is a perspective view schematically showing the release apparatus according to the invention;
Figure 2 shows in more details some of the components of the release apparatus according to the invention, which are illustrated within the circled area "A" in figure 1;
Figure 3 is a perspective view showing in more details the release mechanism of the release apparatus according to the invention, which are illustrated within the circled area "B" in figure 1.

It should be noted that in the detailed description that follows, identical or similar components, either from a structural and/or functional point of view, may have the same or different reference numerals, regardless of whether they are shown in different embodiments of figures of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", or "set" or any similar term is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In addition, when the term "about" or "substantial" or "substantially" is used herein, it has to be understood as encompassing an actual variation of plus or minus 5% with respect to an indicated reference value, axis or position, and when the terms transversal or transversally are hereby used, they have to be understood as encompassing a direction non-parallel to the reference part(s) or direction(s)/axis they refer to, and perpendicularity has to be considered a specific case of transverse direction.

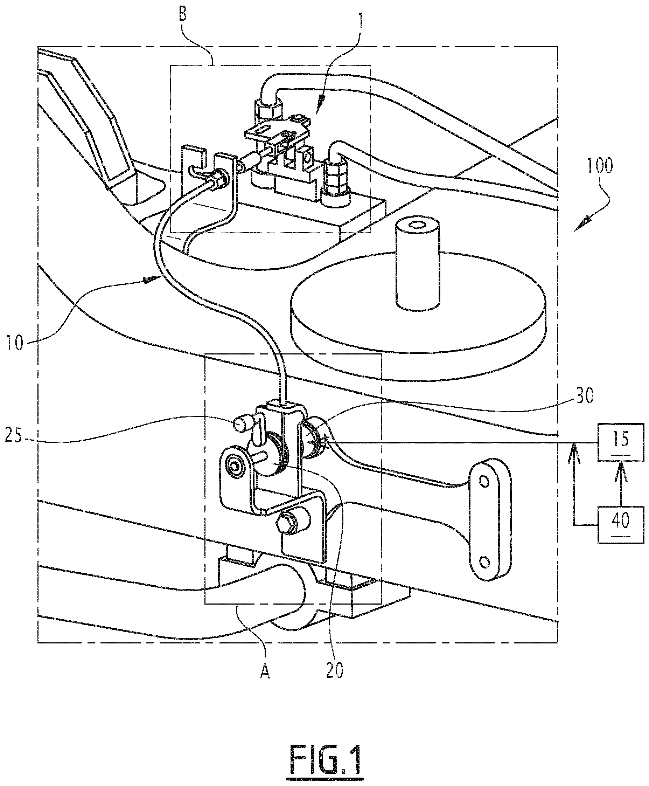

Figure 1 shows an apparatus indicated by the cumulative reference number 100, and hereinafter referred to also as the release apparatus 100, which is suitable to release a parking brake of a vehicle on which the apparatus itself is installed.

The release apparatus 100 according to the invention comprises a release mechanism 1 which can be actuated to move between a locking position where it locks the parking brake into a braking operative position where the parking brake holds the vehicle in a substantially still position, and a releasing position where it releases the parking brake from holding the vehicle in said still position.

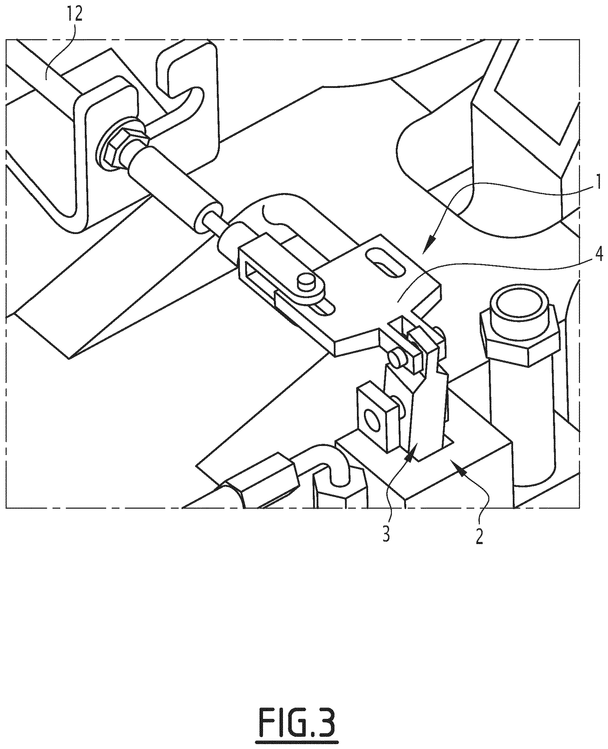

In the exemplary embodiment illustrated in figures 1 and 3, the release mechanism 1 comprises for example a valve 2 having a valve pin 3 and a hinge mechanism 4.

As it will be described in more details hereinafter, when actuated to rotate, the hinge mechanism 4 pulls up the valve pin 3 thus causing the parking brake to be released.

Advantageously, the release apparatus 100 according to the invention further comprises a plurality of actuating means which are configured and mutually arranged to selectively actuate either automatically or manually the release mechanism 1 to move from the locking position into the releasing position.

The term "automatically" has to be understood hereby as referring to an actuation that is executed without using a manual force or without requiring an intervention of a human operator, apart from the initial command needed to be imparted in order to start the release operation.

According to a possible embodiment, the plurality of actuating means comprises a device 20, a cable 10, in particular a flexible cable, which has one end 12 connected to the release mechanism 1, and in particular to the hinge mechanism 4, and a second opposite end 14 which is connected to the device 20 which is adapted to be actuated either manually or automatically to stretch the flexible cable 10 and thus cause the release mechanism 1, and in particular the valve pin 3, to move from the locking position into said releasing position.

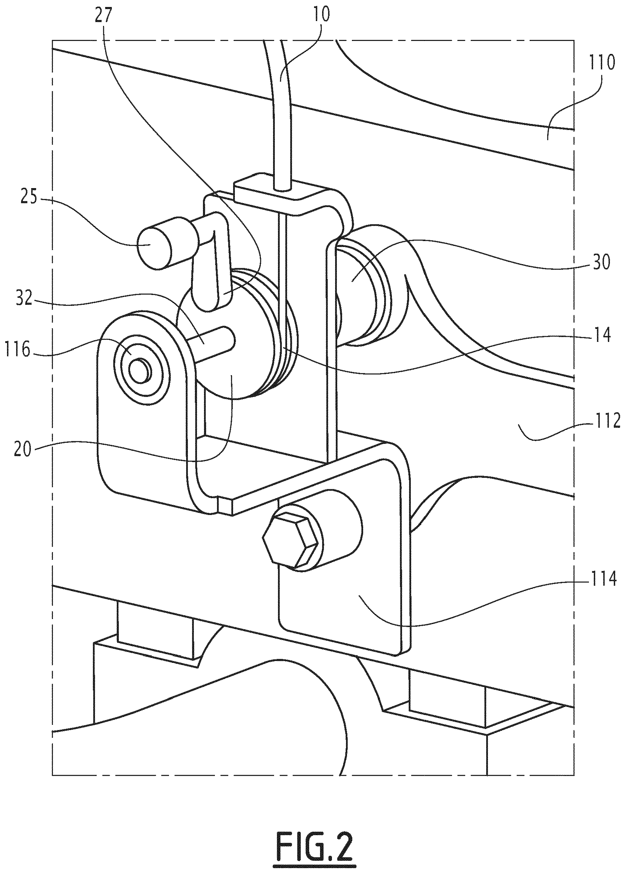

Conveniently, according to a possible embodiment of the release apparatus 100 according to the invention, as illustrated in figures 2 and 3, such device 20 comprises or is constituted by a spool (hereinafter referred to by the same reference number 20 for ease of illustration) having a body configured for wrapping around it at least a portion of the cable 10.

Further, as illustrated in figures 2 and 3 the release apparatus 100 comprises an electrical motor 30 which is mounted on a frame 110 of the vehicle.

According to a possible embodiment, the electrical motor 30 is a geared DC motor.

The frame 110 can be any suitable part of the vehicle, e.g. a part of a boogie of a train car.

As illustrated in more details in figure 2, the motor 30 is mechanically connected to the frame 110 by using a connecting plate 112 which is fixed to the frame 110, and a mounting bracket 114 connected to the connecting plate 112.

According to the exemplary embodiment illustrated, the electrical motor 30 comprises a motor shaft 32 which is pivotally connected to the mounting bracket 114, for example via at least one bearing 116.

The spool 20 is mounted on the motor shaft 32.

In particular, according to solutions readily available to those skilled in the art and therefore not described herein in details, the spool 20 is connected to the motor shaft 32 in such a way that it can rotate solidly with the shaft 32 when the motor 30 is functioning and therefore the release apparatus 100 is carrying out automatically, and in particularly electrically, the release of the parking brake, and to freely rotate relative to the motor 30 when the motor 30 is not fed and the release of the parking brake is under manual execution, as it will be described in more details hereinafter.

Further, as schematically illustrated in figure 1, the plurality of actuating means comprises a switch 40 which is adapted to start/stop the electrical motor 30.

In particular, the switch 40 is conveniently installed on the vehicle in a position remote from the electrical motor 30, e.g. in a position, such as the cabin of the driver, where an operator when necessary can push it in order to start feeding the motor 30, and thus initiating the release of the parking break automatically.

The feeding power for the motor 30 can be provided for example by a power system on board of the vehicle itself.

According to a possible embodiment, the plurality of actuating means comprises also one or more rechargeable batteries 15 for electrically feeding the electrical motor 30.

The one or more batteries can be installed on board of the vehicle and connected to the motor when needed.

Usefully, in the release apparatus 100 according to the invention, the plurality of actuating means further comprises a handle 25 which is configured to be connected to the spool 20, for example in a receiving seat 27, and to be actuated manually by an operator in order to wrap around it at least a portion of the cable 10.

In practice, when it is necessary to release the parking brake, an operator can push the switch 40 thus triggering the onboard power system or the one or more electrical batteries 15 to feed the electrical motor 30.

The electrical motor starts rotating and drags into rotation the spool 20 rotating solidly with the motor shaft 32. During the rotation, the cable 10 is wrapped around the spool 20 and thus is stretched pulling the hinge mechanism 4. As a consequence the hinge mechanism 4 rotates and pulls up the valve pin 3, thus causing the parking brake to be released.

If for whatever reason, e.g. due to lack of available electrical power, the parking brake has to be released manually, an operator can disengage the coupling between the spool 20 and the motor 30; then the handle 25 can be inserted into the seat 27, and the operator, by acting on the handle 25 can rotate the spool 20 that rotates together with the motor shaft 32 relative to the motor 30.

In this way, the cable 10 is wrapped around the spool 20 and, similarly to the automatic release, the hinge mechanism 4 is caused to rotate by the pulling force of the cable 10 and pulls up the valve pin 3 which eventually releases the parking brake.

Hence, it is evident from the foregoing description that the release apparatus 100 and related vehicle according to the present invention allow achieving the intended aim since the release of the parking brake can be carried automatically by using the electrically operated motor 30, thus in a faster way with respect to known solutions and without requiring any physical efforts to operators; further, the release apparatus 100 can be used also manually if desired or needed, according to a solution which in any case is simple to be used, and that requires less efforts and less execution time compared with known solutions.

These results are achieved according to a solution which can be realized in a simpler way with respect to known solutions, and is very easy to be installed in principle in any suitable type of new or existing vehicles.

The release apparatus 100 and related vehicle thus conceived are susceptible of modifications and variations, all of which are within the scope of the appended claims; for example, some of the components can be differently shaped or differently positioned provided that they remain compatible with the scope of the invention as claimed.

## Claims

1. An apparatus (100) for releasing a parking brake of a vehicle, comprising:
- a release mechanism (1) which can be actuated to move between a locking position where it locks the parking brake into a braking operative position where the parking brake holds the vehicle in a substantially still parked position, and a releasing position where it releases the parking brake from holding the vehicle in said parked position; wherein the apparatus (100) further comprises a plurality of actuating means which are configured and mutually arranged to selectively actuate either automatically or manually the release mechanism (1) to move from the locking position into said releasing position, wherein
the plurality of actuating means comprises:
- at least a device (20), a flexible cable (10) having one end (12) connected to said release mechanism (1) and a second opposite end (14) connected to said device (20), and wherein said device (20) is adapted to be actuated manually or automatically to stretch the flexible cable (10) and cause the release mechanism (1) to move from the locking position into said releasing position,
- an electrical motor (30) mounted on a frame (110) of the vehicle and comprising a motor shaft; said device (20) being constituted by or comprising a spool having a body configured for wrapping around it at least a portion of said flexible cable (10), and a handle (25) which is configured to be connected to said spool and to be actuated manually by an operator to wrap around it at least a portion of said flexible cable (10);
**characterised in that**
said spool is mounted on said motor shaft (32).

2. The apparatus (100) as in claim 1, wherein the plurality of actuating means further comprises a switch (40) adapted to start/stop said electrical motor (30).

3. The apparatus (100) as in claim 2, wherein said switch (40) is mounted on the vehicle in a position remote from said electrical motor (30).

4. The apparatus (100) as in any of claims 1 to 2, wherein said electrical motor (30) is a geared DC motor.

5. The apparatus (100) as in in any one of claims 1 to 3, wherein the plurality of actuating means further comprises one or more rechargeable batteries (15) for electrically feeding said electrical motor (30).

6. A vehicle comprising at least one parking brake, wherein it further comprises at least one apparatus (100) for releasing said parking brake as in any of the preceding claims.

## Patentansprüche

1. Vorrichtung (100) zum Freigeben einer Feststellbremse eines Fahrzeugs, umfassend:
- einen Freigabemechanismus (1), der betätigt werden kann, um sich zwischen einer Verriegelungsposition, in der er die Feststellbremse in einer Bremsbetriebsposition verriegelt, in der die Feststellbremse das Fahrzeug in einer im Wesentlichen ruhigen Parkposition hält, und einer Freigabeposition, in der er die Feststellbremse aus einem Halten des Fahrzeugs in der Parkposition freigibt, zu bewegen; wobei die Vorrichtung (100) ferner eine Vielzahl von Betätigungseinrichtungen umfasst, die konfiguriert und gegenseitig angeordnet sind, um den Freigabemechanismus (1) selektiv entweder automatisch oder manuell zu betätigen, um sich von der Verriegelungsposition in die Löseposition zu bewegen, wobei die Vielzahl von Betätigungseinrichtungen Folgendes umfasst:
- mindestens ein Gerät (20), ein flexibles Kabel (10), das ein Ende (12), das mit dem Freigabemechanismus (1) verbunden ist, und ein zweites, gegenüberliegendes Ende (14), das mit dem Gerät (20) verbunden ist, aufweist, und wobei das Gerät (20) angepasst ist, um manuell oder automatisch betätigt zu werden, um das flexible Kabel (10) zu dehnen und zu bewirken, dass sich der Freigabemechanismus (1) von der Verriegelungsposition in die Freigabeposition bewegt,
- einen Elektromotor (30), der an einem Rahmen (110) des Fahrzeugs montiert ist und eine Motorwelle umfasst; wobei das Gerät (20) aus einer Spule besteht oder eine solche umfasst, die einen Körper aufweist, der konfiguriert ist, um von mindestens einem Teil des flexiblen Kabels (10) umwickelt zu sein, und
- einen Griff (25), der konfiguriert ist, um mit der Spule verbunden zu sein und von einem Bediener manuell betätigt zu werden, um zumindest einen Teil des flexiblen Kabels (10) darum zu wickeln;
**dadurch gekennzeichnet, dass** die Spule auf der Motorwelle (32) montiert ist.

2. Vorrichtung (100) nach Anspruch 1, wobei die Vielzahl von Betätigungseinrichtungen ferner einen Schalter (40) umfasst, der angepasst ist, um den Elektromotor (30) zu starten/anzuhalten.

3. Vorrichtung (100) nach Anspruch 2, wobei der Schalter (40) in einer vom Elektromotor (30) entfernten Position an dem Fahrzeug montiert ist.

4. Vorrichtung (100) nach einem der Ansprüche 1 bis 2, wobei der Elektromotor (30) ein Gleichstromgetriebemotor ist.

5. Vorrichtung (100) nach einem der Ansprüche 1 bis 3, wobei die Vielzahl von Betätigungseinrichtungen ferner eine oder mehrere wiederaufladbare Batterien (15) zum elektrischen Versorgen des Elektromotors (30) umfasst.

6. Fahrzeug, umfassend mindestens eine Feststellbremse, wobei es ferner mindestens eine Vorrichtung (100) zum Freigeben der Feststellbremse nach einem der vorherigen Ansprüche umfasst.

## Revendications

1. Appareil (100) pour desserrer un frein de stationnement d'un véhicule, comprenant :
un mécanisme de desserrage (1) qui peut être actionné pour se déplacer entre une position de blocage dans laquelle il bloque le frein de stationnement dans une position opérationnelle de freinage dans laquelle le frein de stationnement maintient le véhicule dans une position sensiblement toujours stationnée, et une position de desserrage dans laquelle il desserre le frein de stationnement en maintenant le véhicule dans ladite position stationnée ; dans lequel l'appareil (100) comprend en outre une pluralité de moyens d'actionnement qui sont configurés et mutuellement agencés pour actionner sélectivement automatiquement ou manuellement le mécanisme de desserrage (1) pour se déplacer de la position de blocage dans ladite position de desserrage, dans lequel :
la pluralité de moyens d'actionnement comprend :
au moins un dispositif (20), un câble flexible (10) ayant une extrémité (12) raccordée audit mécanisme de desserrage (1) et une seconde extrémité (14) opposée raccordée audit dispositif (20), et dans lequel ledit dispositif (20) est adapté pour être actionné manuellement ou automatiquement afin d'étirer le câble flexible (10) et amener le mécanisme de desserrage (1) à se déplacer de la position de blocage dans ladite position de desserrage,
un moteur électrique (30) monté sur un châssis (110) du véhicule et comprenant un arbre de moteur ; ledit dispositif (20) étant constitué par ou comprenant une bobine ayant un corps configuré pour enrouler autour de lui, au moins une partie dudit câble flexible (10), et
une poignée (25) qui est configurée pour être raccordée à ladite bobine et être actionnée manuellement par un opérateur pour enrouler autour d'elle, au moins une partie dudit câble flexible (10) ;
**caractérisé en ce que** :
ladite bobine est montée sur ledit arbre de moteur (32).

2. Appareil (100) selon la revendication 1, dans lequel la pluralité de moyens d'actionnement comprend en outre un commutateur (40) adapté pour démarrer/arrêter ledit moteur électrique (30).

3. Appareil (100) selon la revendication 2, dans lequel ledit commutateur (40) est monté sur le véhicule dans une position à distance dudit moteur électrique (30).

4. Appareil (100) selon l'une quelconque des revendications 1 à 2, dans lequel ledit moteur électrique (30) est un moteur à engrenages à courant continu.

5. Appareil (100) selon l'une quelconque des revendications 1 à 3, dans lequel la pluralité de moyens d'actionnement comprend en outre une ou plusieurs batteries rechargeables (15) pour alimenter électriquement ledit moteur électrique (30).

6. Véhicule comprenant au moins un frein de stationnement, dans lequel il comprend en outre au moins un appareil (100) pour desserrer ledit frein de stationnement selon l'une quelconque des revendications précédentes.
